# EUROPEAN PATENT APPLICATION

(11) **EP 4 629 013 A1**
(43) Date of publication of application: **08.10.2025**
(21) Application number: 25157946.2
(22) Date of filing: 14.02.2025
(51) Int. Cl.: G05D 1/223, G05D 105/22, G05D 107/13, G05D 109/10

(54) **REMOTE OPERATOR TERMINAL**

(30) Priority: 05.04.2024 JP 2024061724
(71) Applicant: TOYOTA JIDOSHA KABUSHIKI KAISHA, Toyota-shi, Aichi-Ken, 471-8571 (JP)
(72) Inventor: SUEHIRO, Yuki, Toyota-shi, 471-8571 (JP); SAKAOKA, Emi, Toyota-shi, 471-8571 (JP); SUDA, Rio, Toyota-shi, 471-8571 (JP)
(74) Representative: D Young & Co LLP

(57) **Abstract**

A remote operator terminal (200) to be used by a remote operator (O) for a remote operation of a target mobility (100-T) is provided. The remote operator terminal (200) includes a plurality of types of operation systems (210-1 to 210-N), a user interface (233), and a control device (250) configured to perform calibration of a targe operation system (210-T) among the plurality of types of operation systems (210-1 to 210-N). In the calibration, the control device (250) presents a first notification to the remote operator (O) through the user interface (233), the first notification prompting the remote operator (O) to perform a first action on the targe operation system (210-T). Then, the control device (250) sets a zero point of the targe operation system (210-T) based on a content of the first action or a state of the targe operation system (210-T) during the first action.

## Description

### TECHNICAL FIELD

The present disclosure relates to a remote operator terminal to be used by a remote operator for a remote operation of a mobility.

### BACKGROUND ART

Patent Literature 1 discloses a remote driving apparatus used for remote driving of a vehicle. When a state of equipment of the remote driving apparatus does not match a state of equipment of the vehicle, the remote driving of the vehicle is prohibited.

### List of Related Art

Patent Literature 1: Japanese Laid-Open Patent Application No. JP-2019-174993

### SUMMARY

A remote operator terminal to be used by a remote operator for a remote operation of a target mobility is considered. Conventionally, a case where a single remote operator terminal is provided with a plurality of types of operation systems has not been considered. In addition, depending on a type of a operation system, a zero point (N point, neutral point) may not be uniquely determined.

A first aspect is directed to a remote operator terminal to be used by a remote operator for a remote operation of a target mobility.

The remote operator terminal includes:
a plurality of types of operation systems;
a user interface; and
a control device configured to perform calibration of a target operation system among the plurality of types of operation systems.

In the calibration, the control device presents a first notification to the remote operator through the user interface, the first notification prompting the remote operator to perform a first action on the target operation system. Then, the control device sets a zero point of the target operation system based on a content of the first action or a state of the target operation system during the first action.

According to the present disclosure, a single remote operator terminal is provided with the plurality of types of operation systems. Furthermore, the remote operator terminal is configured to allow the remote operator to perform the calibration (customization) of a desired target operation system. This improves usability of the operation system for the remote operator.

### BRIEF DESCRIPTION OF DRAWINGS

FIG. 1 is a conceptual diagram for explaining an overview of a remote operation system;
FIG. 2 is a conceptual diagram for explaining examples of a plurality of types of operation systems installed on a remote operator terminal;
FIG. 3 is a block diagram showing an example of a configuration of a remote operator terminal;
FIG. 4 is a block diagram showing an example of a functional configuration related to manual selection of a first operation system used for the remote operation;
FIG. 5 is a diagram showing an example of specification information;
FIG. 6 is a flowchart showing an example of processing by a selection control unit of a remote operator terminal;
FIG. 7 is a flowchart showing another example of processing by a selection control unit of a remote operator terminal;
FIG. 8 is a block diagram showing an example of a functional configuration related to automatic selection of a first operation system used for the remote operation;
FIG. 9 is a flowchart showing an example of processing by an automatic selection unit of a remote operator terminal;
FIG. 10 is a flowchart showing another example of processing by an automatic selection unit of a remote operator terminal;
FIG. 11 is a block diagram showing an example of a configuration related to calibration of an operation system;
FIG. 12 is a conceptual diagram for explaining an example of zero point setting of an operation system;
FIG. 13 is a conceptual diagram for explaining an example of maximum operation point setting of an operation system;
FIG. 14 is a block diagram showing an example of a functional configuration related to end notification;
FIG. 15 is a conceptual diagram for explaining a first example of end notification;
FIG. 16 is a conceptual diagram for explaining a second example of end notification;
FIG. 17 is a conceptual diagram for explaining a third example of end notification; and
FIG. 18 is a block diagram showing an example of a configuration of a remote operator terminal.

### DETAILED DESCRIPTION

Embodiments of the present disclosure will be described with reference to the accompanying drawings.

### 1. OVERVIEW OF REMOTE OPERATION SYSTEM

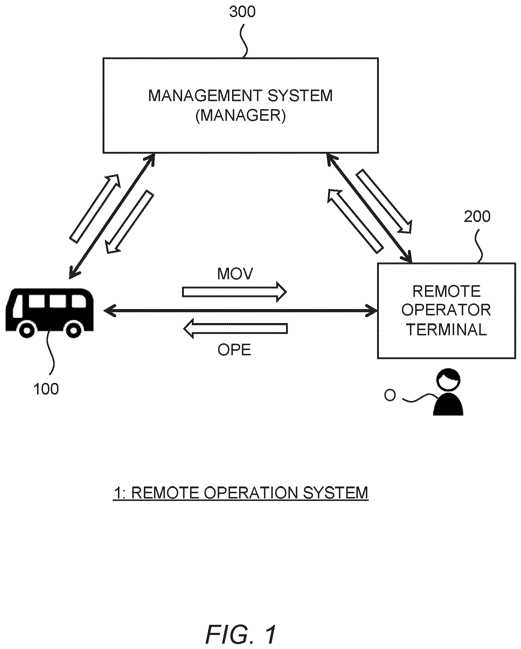

FIG. 1 is a conceptual diagram for explaining an overview of a remote operation system 1 according to the present embodiment. The remote operation system 1 is a system for a remote operation of the mobility 100. The remote operation is a concept including remote driving. The remote operation system 1 includes a mobility 100, a remote operator terminal 200, and a management system 300.

The mobility 100 is a moving body that is movable. The mobility 100 may be manually operated by an operator on-board the mobility 100. The mobility 100 may have an autonomous movement function. In either case, the mobility 100 is configured to be able to be operated remotely, if necessary. That is, the mobility 100 is a target of the remote operation by the remote operation system 1.

A type of the mobility 100 being the target of the remote operation is not limited to one, and may be plural. For example, the mobility 100 may be a vehicle that travels on a public road (e.g., a passenger car, a truck, a bus, a MaaS vehicle, an autonomous driving vehicle, and the like). As another example, the mobility 100 may be a vehicle used in a factory (e.g., a forklift, a factory truck, and the like). As still another example, the mobility 100 may be a special small vehicle (e.g., a golf cart, a personal mobility, an electric wheelchair, and the like). As still another example, the mobility 100 may be a construction machine (e.g., a power shovel, a bulldozer, and the like). As still another example, the mobility 100 may be a robot (e.g., a logistics robot, a work robot, and the like). As still another example, the mobility 100 may be a flying object (e.g., a drone, and the like). As still another example, the mobility 100 may be a ship (e.g., a small ship, a large cruiser, and the like).

The remote operator terminal 200 is a terminal device used by the remote operator O when remotely operating the mobility 100. That is, the remote operator terminal 200 is configured to be used by the remote operator O for the remote operation of the mobility 100. The remote operator terminal 200 can also be referred to as a remote operation human machine interface (HMI) or a remote cockpit. A single remote operator terminal 200 may be configured to be capable of handling the remote operation of a variety of mobilities 100. A combination of the remote operator O and the remote operator terminal 200 may be determined in advance or may be freely changeable. That is, a single remote operator terminal 200 may be used only by a specific remote operator O or may be used by various remote operators O in turn.

The management system (manager) 300 manages the remote operation system 1. The management system 300 may be configured by a plurality of servers that perform distributed processing. For example, the management system 300 manages a plurality of remote operators O and a plurality of remote operator terminals 200. In addition, the management system 300 allocates a remote operator O and a remote operator terminal 200 to the remote operation of a mobility 100 in response to a remote operation request. The management system 300 may also manage a state of the mobility 100 during the remote operation.

The mobility 100, the remote operator terminal 200, and the management system 300 can communicate with each other via a communication network. For example, the mobility 100 is able to wirelessly communicate with the remote operator terminal 200 and the management system 300 via a wireless communication network. The remote operator terminal 200 and the management system 300 are able to communicate with each other via a wired communication network or a wireless communication network. The mobility 100 and the remote operator terminal 200 may communicate with each other via the management system 300, or may directly communicate with each other without through the management system 300.

A rough flow of information during the remote operation of the mobility 100 is as follows.

Various sensors including a camera are mounted on the mobility 100. The camera captures an image of a situation around the mobility 100. The camera obtains a video (image) showing the situation around the mobility 100. Mobility information MOV is information obtained by the various sensors and includes at least the video taken by the camera. The mobility information MOV may include a position and a state (e.g., a speed, a steering angle, and the like) of the mobility 100. The mobility 100 transmits the mobility information MOV to the remote operator terminal 200.

The remote operator terminal 200 receives the mobility information MOV transmitted from the mobility 100. The remote operator terminal 200 presents the mobility information MOV to the remote operator O. More specifically, the remote operator terminal 200 includes a display device, and displays the video and the like on the display device. The remote operator O views the displayed information, recognizes the situation around the mobility 100, and performs the remote operation of the mobility 100. Remote operation information OPE is information related to the remote operation (e.g., a steering operation, an acceleration operation, a deceleration operation, a forward/backward movement operation, a lateral movement operation, and the like) performed by the remote operator O. For example, the remote operation information OPE includes an operation amount and operation content input by the remote operator O. It can be said that the remote operation information OPE is information reflecting a degree of the remote operation performed by the remote operator O. The remote operator terminal 200 transmits the remote operation information OPE to the mobility 100.

The mobility 100 receives the remote operation information OPE transmitted from the remote operator terminal 200. The mobility 100 performs mobility control in accordance with the received remote operation information OPE. In this manner, the remote operation of the mobility 100 is realized.

### 2. MULTIPLE TYPES OF OPERATION SYSTEMS

Hereinafter, an "operation system" included in the remote operator terminal 200 will be considered. The operation system is a member or a device that is used by the remote operator O for inputting an operation amount and operation content of the remote operation of the mobility 100. The remote operator O is able to input the operation amount and the operation content for the remote operation of the mobility 100 by using the operation system of the remote operator terminal 200. Then, the remote operation information OPE corresponding to the operation amount and the operation content input through the operation system is generated.

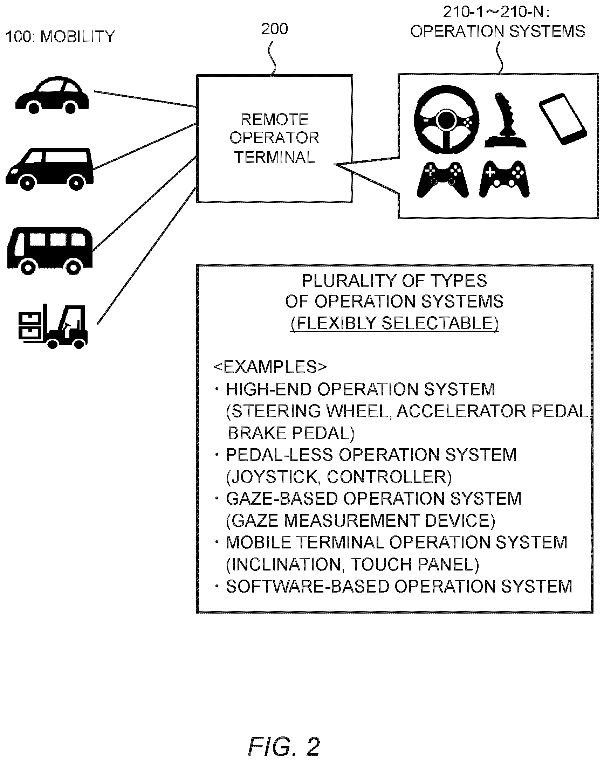

According to the present embodiment, a single remote operator terminal 200 is provided with a plurality of different types of operation systems 210-1 to 210-N. Here, N is an integer of 2 or more. FIG. 2 shows examples of a variety of operation systems 210.

A high-end operation system includes physical operation members such as a steering wheel, an accelerator pedal, and a brake pedal. The high-end operation system may further include operation members such as a direction indicator and a switch. The operation member is physically movable, and a position (i.e., a displacement amount) and a movement of the operation member are detected by a sensor. Examples of the sensor include a steering angle sensor, a steering torque sensor, an accelerator position sensor, a brake position sensor, and the like. The position and the movement of the operation member detected by the sensor correspond to the operation amount and the operation content for the remote operation of the mobility 100.

A pedal-less operation system does not include an accelerator pedal nor a brake pedal, and does not require an operation by a foot. Therefore, the pedal-less operation system can be used by a physically disabled remote operator O.

For example, the pedal-less operation system includes one or more joysticks as the operation member. The joystick is also physically movable, and its position (i.e., a displacement amount) and movement are detected by a sensor. Examples of the sensor include a load sensor. The position and the movement of the joystick detected by the sensor correspond to the operation amount and the operation content for the remote operation of the mobility 100. As an example, let us consider a case where the pedal-less operation system includes a left joystick and a right joystick. For example, pulling the left joystick corresponds to "left turn," pushing the left joystick corresponds to "right turn," pulling the right joystick corresponds to "deceleration," and pushing the right joystick corresponds to "acceleration."

As another example, the pedal-less operation system may include a controller such as a controller of a game machine. The controller includes a cross key and a plurality of buttons. The remote operator O can remotely operate the mobility 100 in a game-like manner by using the controller.

A gaze-based operation system realizes the remote operation based on movement of a line of sight (eyes) of the remote operator O. For this purpose, the gaze-based operation system includes a gaze measurement device (a gaze camera, an eye tracker) that measures a gaze direction of the remote operator O. The gaze measurement device is a known technique. For example, a movement of the line of sight in the left direction corresponds to "left turn," its movement in the right direction corresponds to "right turn," its movement in the downward direction corresponds to with "deceleration," and its movement in the upward direction corresponds to "acceleration." Such the gaze-based operation system can be used by a physically disabled remote operator O. The gaze-based operation system may be realized by a wearable device.

A mobile terminal operation system realizes the remote operation based on an operation of a mobile terminal. Examples of the mobile terminal include a smartphone and a tablet. The mobile terminal operation system can be used by a physically disabled remote operator O.

For example, an inclination (posture) of the mobile terminal corresponds to the operation amount and the operation content for the remote operation. The inclination of the mobile terminal is detected by, for example, a gyro sensor or an acceleration sensor installed on the mobile terminal. For example, inclining the mobile terminal to the left corresponds to "left turn," inclining the mobile terminal to the right corresponds to "right turn," inclining the mobile terminal to the back corresponds to "deceleration," and inclining the mobile terminal to the front corresponds to "acceleration."

As another example, a software-based operation system may be displayed on a touch panel of the mobile terminal. The software-based operation system imitates, for example, a controller having a cross key and a plurality of buttons. Touching the software-based operation system displayed on the touch panel makes it possible to perform the remote operation as in the case of the physical operation system.

It should be noted that the plurality of different types of operation systems 210-1 to 210-N included in a single remote operator terminal 200 do not necessarily have to be physically separated from each other. For example, the operation systems 210-1 to 210-N may be a plurality of different types of software-based operation systems. In this case, the software-based operation system is switched and displayed on the same touch panel.

### 3. MANUAL SELECTION OF OPERATION SYSTEM BY REMOTE OPERATOR

### 3-1. Overview

In the following description, the mobility 100 that is the target of the remote operation will be referred to as a "target mobility 100-T." The operation system 210 used by the remote operator O for the remote operation of the target mobility 100-T is hereinafter referred to as a "first operation system 210-A." As described above, a single remote operator terminal 200 is provided with a plurality of different types of operation systems 210-1 to 210-N. Therefore, the remote operator O can select his or her favorite first operation system 210-A or a first operation system 210-A that the remote operator O is good at from among the operation systems 210-1 to 210-N. Moreover, the remote operator O can flexibly select the first operation system 210-A according to a type of the target mobility 100-T. Even if the target mobility 100-T is the same, the remote operator O may change the first operation system 210-A according to a mood of the day. These contribute to improvement in accuracy of the remote operation of the target mobility 100-T.

### 3-2. Configuration Example

In order to facilitate the manual selection of the first operation system 210-A by the remote operator O, the remote operator terminal 200 may have the following configuration.

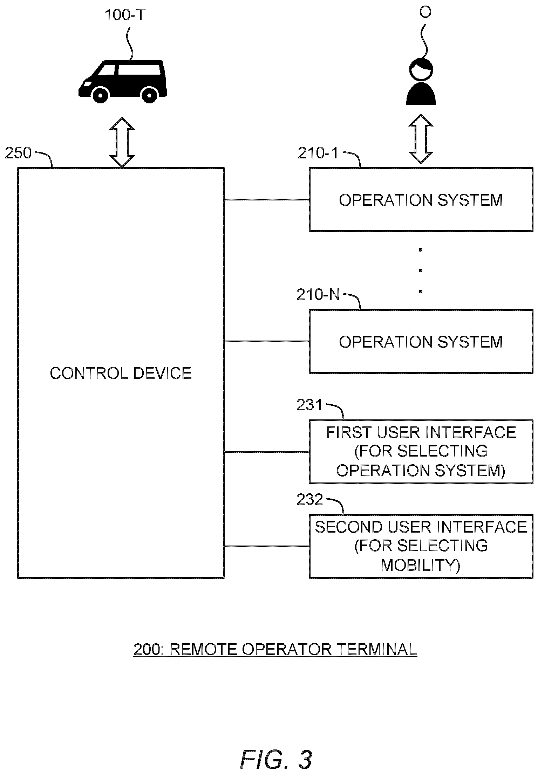

FIG. 3 is a block diagram showing an example of a configuration of the remote operator terminal 200. The remote operator terminal 200 includes the operation systems 210-1 to 210-N, a first user interface 231, a second user interface 232, and a control device (controller) s250.

The first user interface 231 is a user interface (UI) configured to allow the remote operator O to select the first operation system 210-A. More specifically, the first user interface 231 is configured to present one or more selectable operation systems 210-X among the plurality of types of operation systems 210-1 to 210-N to the remote operator O. The selectable operation system 210-X is a operation system 210 that can be selected by the remote operator O, and is a candidate of the first operation system 210-A. Further, the first user interface 231 is configured to receive the remote operator O's selection of the first operation system 210-A from among the one or more selectable operation systems 210-X.

For example, the first user interface 231 includes a first touch panel. The first touch panel may be provided separately from the operation systems 210-1 to 210-N. The one or more selectable operation systems 210-X are displayed on the first touch panel. The remote operator O touches a desired first operation system 210-A among the one or more selectable operation systems 210-X displayed on the first touch panel. Thus, the remote operator O is able to select a desired first operation system 210-A from among the one or more selectable operation systems 210-X.

As another example, the first user interface 231 may include a plurality of selection units respectively provided in the plurality of types of operation systems 210-1 to 210-N. For example, each selection unit includes a lamp and a button. The lamp provided in the selectable operation system 210-X is lighted, and thereby the remote operator O is able to recognize the selectable operation system 210-X. Then, the remote operator O presses the button provided in a desired first operation system 210-A among the one or more selectable operation systems 210-X. Thus, the remote operator O is able to select a desired first operation system 210-A from among the one or more selectable operation systems 210-X.

As yet another example, the first user interface 231 may include a voice recognizer. The remote operator O utters a desired first operation system 210-A by voice. The voice recognizer recognizes the first operation system 210-A by recognizing the utterance of the remote operator O. Thus, the remote operator O is able to select a desired first operation system 210-A from among the one or more selectable operation systems 210-X.

The second user interface 232 is a user interface (UI) configured to allow the remote operator O to select the target mobility 100-T that is a target of the remote operation. More specifically, the second user interface 232 is configured to present one or more selectable mobilities 100-X to the remote operator O. The selectable mobility 100-X is a mobility 100 that can be selected by the remote operator O, and is a candidate of the target mobility 100-T. Further, the second user interface 232 is configured to receive the remote operator O's selection of the target mobility 100-T from among the one or more selectable mobilities 100-X.

For example, the second user interface 232 includes a second touch panel. The second touch panel may be provided separately from the operation systems 210-1 to 210-N. The one or more selectable mobilities 100-X are displayed on the second touch panel. The remote operator O touches a desired target mobility 100-T among the one or more selectable mobilities 100-X displayed on the second touch panel. Thus, the remote operator O is able to select a desired target mobility 100-T from among the one or more selectable mobilities 100-X.

As another example, the second user interface 232 may include a voice recognizer. The remote operator O utters a desired target mobility 100-T by voice. The voice recognizer recognizes the target mobility 100-T by recognizing the utterance of the remote operator O. Thus, the remote operator O is able to select a desired target mobility 100-T from among the one or more selectable mobilities 100-X.

The first user interface 231 and the second user interface 232 may be the same interface (e.g., a touch panel).

The control device (controls) 250 controls the remote operator terminal 200. For example, the control device 250 executes a variety of processing in order to cause the remote operator O to select the first operation system 210-A through the first user interface 231. The control device 250 also executes a variety of processing in order to cause the remote operator O to select the target mobility 100-T through the second user interface 232. Further, the control device 250 can communicate with the target mobility 100-T via a communication network. The control device 250 can communicate with the operation systems 210-1 to 210-N via a wired or wireless connection. The control device 250 controls data communication between the first operation system 210-A and the target mobility 100-T during the remote operation of the target mobility 100-T.

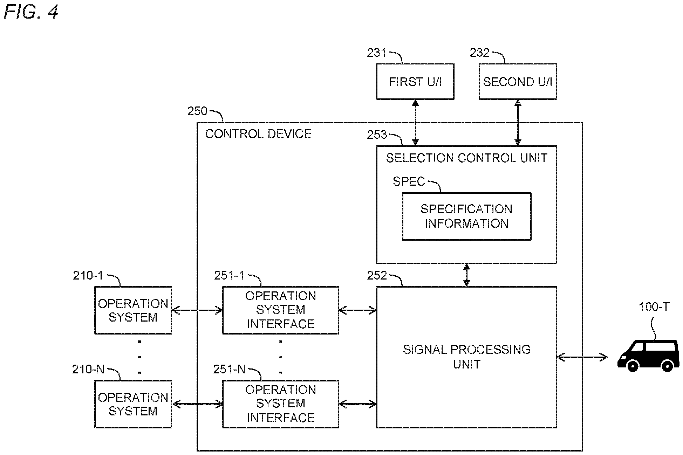

FIG. 4 is a block diagram showing an example of a functional configuration of the control device 250. The control device 250 includes a plurality of operation system interfaces 251-1 to 251-N, a signal processing unit 252, and a selection control unit 253.

The operation system interface 251-i (i = 1 to N) is an interface with respect to the operation system 210-i, and is connected to the operation system 210-i in a wired or wireless manner. The operation system interface 251-i receives an operation signal indicating an operation amount and operation content input by the remote operator O from the operation system 210-i. Then, the operation system interface 251-i outputs the received operation signal to the signal processing unit 252. The operation system interface 251-i may receive a control signal from the signal processing unit 252 and transmit the control signal to the operation system 210-i.

The signal processing unit 252 grasps the first operation system 210-A selected by the remote operator O (the selection of the first operation system 210-A will be described later). The signal processing unit 252 receives the operation signal from the first operation system 210-A through the operation system interface 251-A. The signal processing unit 252 then generates the remote operation information OPE based on the received operation signal, and transmits the remote operation information OPE to the target mobility 100-T.

A non-selected operation system 210-B is other than the first operation system 210-A among the operation systems 210-1 to 210-N. During the remote operation of the target mobility 100-T, the remote operator O may accidentally touch the non-selected operation system 210-B. In this case, the operation signal from the non-selected operation system 210-B may be input to the signal processing unit 252. However, the signal processing unit 252 invalidates (ignores) the operation signal input from the non-selected operation system 210-B. In other words, the signal processing unit 252 selects only the operation signal input from the first operation system 210-A through the operation system interface 251-A, and does not select the operation signal input from the non-selected operation system 210-B. The signal processing unit 252 generates the remote operation information OPE based on the selected operation signal, and transmits the remote operation information OPE to the target mobility 100-T. It is thus possible to prevent the target mobility 100-T from malfunctioning, even if the remote operator O accidentally touches the non-selected operation system 210-B.

Moreover, the signal processing unit 252 receives the mobility information MOV transmitted from the target mobility 100-T. The signal processing unit 252 outputs the received mobility information MOV to a display system of the remote operator terminal 200. Alternatively, the signal processing unit 252 may output the received mobility information MOV to the first operation system 210-A through the operation system interface 251-A. However, the signal processing unit 252 does not output the received mobility information MOV to the non-selected operation system 210-B.

The selection control unit 253 executes processing for causing the remote operator O to select the first operation system 210-A and the target mobility 100-T. The selection control unit 253 may store specification information SPEC indicating respective specifications of the operation systems 210-1 to 210-N.

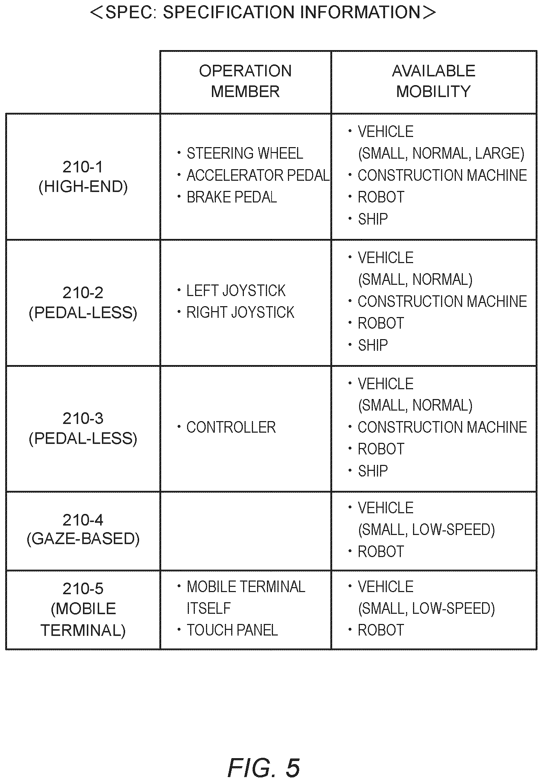

FIG. 5 is a diagram showing an example of the specification information SPEC. The specification information SPEC indicates one or more types of the mobilities 100 that can be handled for each operation system 210-i (i = 1 to N). In other words, the specification information SPEC indicates, for each operation system 210-i, one or more types of the mobilities 100 that are remotely operable by the operation system 210-i. In still other words, the specification information SPEC indicates a correspondence relationship between the operational system 210-i and one or more types of the selectable mobilities 100-X. As shown in FIG. 5, the type of the mobility 100 that can be handled varies depending on the operation system 210-i. For example, the high-end operation system is suitable for the remote operation of a variety of vehicles, and is also suitable for traveling on public roads and long-distance driving. On the other hand, the mobile terminal operation system is not necessarily suitable for traveling on a public road or driving for a long distance. The mobile terminal operation system can be used for short-distance low-speed driving of a vehicle in a limited area such as a parking lot, assistance of automated driving such as evacuation to a road shoulder in an emergency, a remote operation of a small vehicle in a factory, and the like.

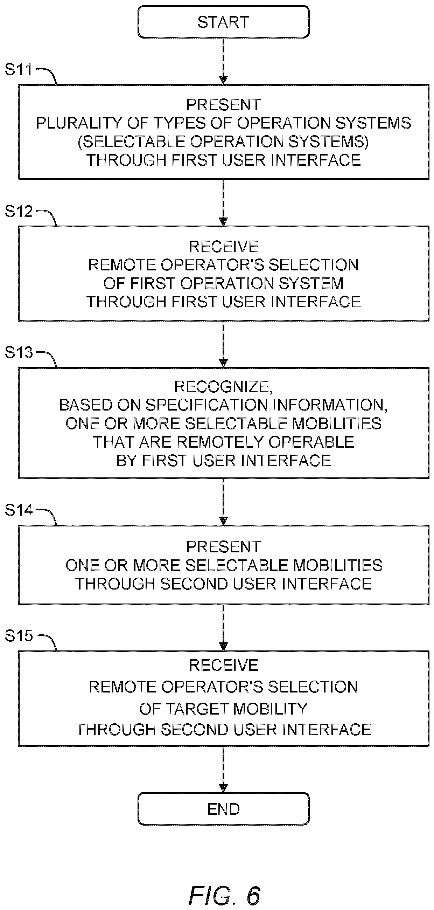

FIG. 6 is a flowchart showing an example of processing performed by the selection control unit 253 of the remote operator terminal 200.

In Step S11, the selection control unit 253 presents the plurality of types of operation systems 210-1 to 210-N to the remote operator O through the first user interface 231. In this example, the plurality of types of operation systems 210-1 to 210-N correspond to the selectable operation systems 210-X. The selectable operation system 210-X, which is an operation system 210 that the remote operator O is allowed to select, is a candidate of the first operation system 210-A. The selection control unit 253 prompts, through the first user interface 231, the remote operator O to select a desired first operation system 210-A from among the operation systems 210-1 to 210-N (i.e., the selectable operation systems 210-X).

In Step S12, the selection control unit 253 receives the remote operator O's selection of the first operation system 210-A through the first user interface 231. The selection control unit 253 may clearly indicate the selected first operation system 210-A through the first user interface 231. Then, the selection control unit 253 notifies the signal processing unit 252 of the first operation system 210-A selected by the remote operator O. Thus, the signal processing unit 252 is able to grasp the first operation system 210-A selected by the remote operator O.

In Step S13 after the first operation system 210-A is selected, the selection control unit 253 recognizes one or more mobilities 100 that can be handled by the selected first operation system 210-A, based on the specification information SPEC. In other words, the selection control unit 253 recognizes one or more mobilities 100 that are remotely operable by the selected first operation system 210-A, based on the specification information SPEC. The recognized one or more mobilities 100 correspond to the one or more selectable mobilities 100-X.

In Step S14, the selection control unit 253 presents the one or more selectable mobilities 100-X to the remote operator O through the second user interface 232. The selectable mobility 100-X, which is a mobility 100 that the remote operator O is allowed to select, is a candidate of the target mobility 100-T. The selection control unit 253 prompts, through the second user interface 232, the remote operator O to select a desired target mobility 100-T from among the one or more selectable mobilities 100-X.

In Step S15, the selection control unit 253 receives the remote operator O's selection of the target mobility 100-T through the second user interface 232. The selection control unit 253 may clearly indicate the selected target mobility 100-T through the second user interface 232. Then, the selection control unit 253 notifies the signal processing unit 252 of the target mobility 100-T selected by the remote operator O. Thus, the signal processing unit 252 is able to grasp the target mobility 100-T selected by the remote operator O.

According to the processing flow shown in FIG. 6, it is possible to efficiently select the target mobility 100-T suitable for the first operation system 210-A selected by the remote operator O.

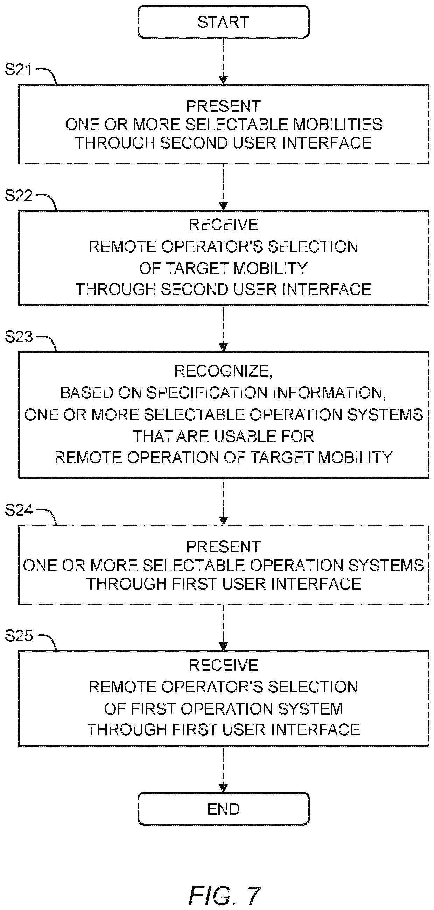

FIG. 7 is a flowchart showing another example of the processing performed by the selection control unit 253 of the remote operator terminal 200.

In Step S21, the selection control unit 253 presents one or more selectable mobilities 100-X to the remote operator O through the second user interface 232. The selection control unit 253 prompts, through the second user interface 232, the remote operator O to select a desired target mobility 100-T from among the one or more selectable mobilities 100-X.

In Step S22, the selection control unit 253 receives the remote operator O's selection of the target mobility 100-T through the second user interface 232. The selection control unit 253 may clearly indicate the selected target mobility 100-T through the second user interface 232. Then, the selection control unit 253 notifies the signal processing unit 252 of the target mobility 100-T selected by the remote operator O. Thus, the signal processing unit 252 is able to grasp the target mobility 100-T selected by the remote operator O.

In Step S23 after the target mobility 100-T is selected, the selection control unit 253 recognizes one or more operation systems 210 that can handle the selected target mobility 100-T, based on the specification information SPEC. In other words, the selection control unit 253 recognizes one or more operation systems 210 that are usable for the remote operation of the selected target mobility 100-T, based on the specification information SPEC. The recognized one or more operation systems 210 correspond to the one or more selectable operation systems 210-X.

In Step S24, the selection control unit 253 presents the one or more selectable operation systems 210-X to the remote operator O through the first user interface 231. The selection control unit 253 prompts, through the first user interface 231, the remote operator O to select a desired first operation system 210-A from among the one or more selectable operation systems 210-X.

In Step S25, the selection control unit 253 receives the remote operator O's selection of the first operation system 210-A through the first user interface 231. The selection control unit 253 may clearly indicate the selected first operation system 210-A through the first user interface 231. Then, the selection control unit 253 notifies the signal processing unit 252 of the first operation system 210-A selected by the remote operator O. Thus, the signal processing unit 252 is able to grasp the first operation system 210-A selected by the remote operator O.

According to the processing flow shown in FIG. 7, it is possible to efficiently select the first operation system 210-A suitable for the target mobility 100-T selected by the remote operator O.

It is also conceivable that the remote operator O desires to change the first operation system 210-A after the start of the remote operation of the target mobility 100-T. However, while the target mobility 100-T is moving, changing the first operation system 210-A is prohibited. When the target mobility 100-T is stopped, changing the first operation system 210-A is permitted. For example, during the remote operation of the target mobility 100-T, the signal processing unit 252 receives the mobility information MOV including speed information from the target mobility 100-T. The signal processing unit 252 provides the speed information to the selection control unit 253. The selection control unit 253 prohibits a change in the first operation system 210-A when the target mobility 100-T is moving, and permits a change in the first operation system 210-A when the target mobility 100-T is stopped.

When an abnormality occurs in the first operation system 210-A in use, the signal processing unit 252 may transmit a stop instruction to the target mobility 100-T. Then, the selection control unit 253 may prompt, through the first user interface 231, the remote operator O to change the first operation system 210-A to be used.

### 3-3. EFFECTS

As described above, according to the present embodiment, a single remote operator terminal 200 is provided with the plurality of types of operation systems 210-1 to 210-N. Further, the remote operator terminal 200 is provided with the first user interface 231 for allowing the remote operator O to select the first operation system 210-A to be used from among the plurality of types of operation systems 210-1 to 210-N. Therefore, the remote operator O can freely select his or her favorite first operation system 210-A or a first operation system 210-A that the remote operator O is good at. Moreover, the remote operator O can flexibly select the first operation system 210-A according to the type of the target mobility 100-T. These contribute to improvement in the accuracy of the remote operation of the target mobility 100-T.

### 4. AUTOMATIC SELECTION OF OPERATION SYSTEM

### 4-1. Overview

The remote operator terminal 200 may be configured to automatically select the first operation system 210-A from among the plurality of types of operation systems 210-1 to 210-N. This reduces the number of operations required of the remote operator O, and thus reduces load on the remote operator O.

### 4-2. Configuration Example

The basic configuration of the remote operator terminal 200 is the same as that in the case of the above-described Section 3. A description overlapping with that in the Section 3 will be omitted as appropriate.

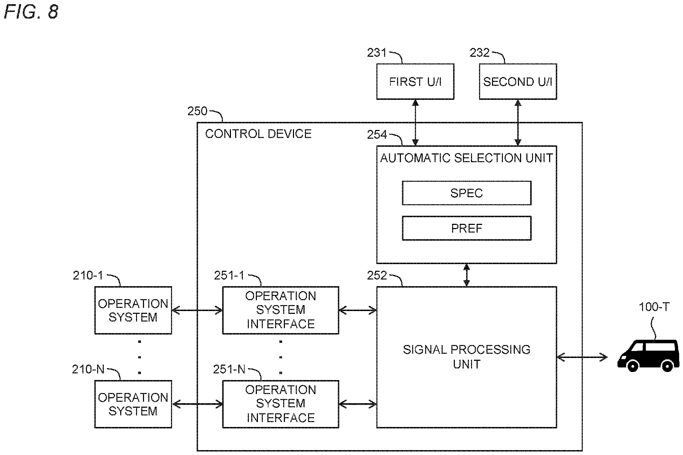

FIG. 8 is a block diagram showing an example of a functional configuration of the control device 250 of the remote operator terminal 200. The control device 250 includes the plurality of operation system interfaces 251-1 to 251-N, the signal processing unit 252, and an automatic selection unit 254.

The automatic selection unit 254 executes automatic selection processing that automatically selects the first operation system 210-A from among the plurality of types of operation systems 210-1 to 210-N. The automatic selection unit 254 may store the specification information SPEC described above (see FIG. 5).

The automatic selection unit 254 may store priority information PREF that serves as reference when automatically selecting the first operation system 210-A. For example, the priority information PREF includes history information indicating a history of the first operation system 210-A used in the past. As another example, the priority information PREF may include operator preference information indicating a preference of the remote operator O. The operator preference information indicates, for example, the operation system 210 designated in advance by the remote operator O.

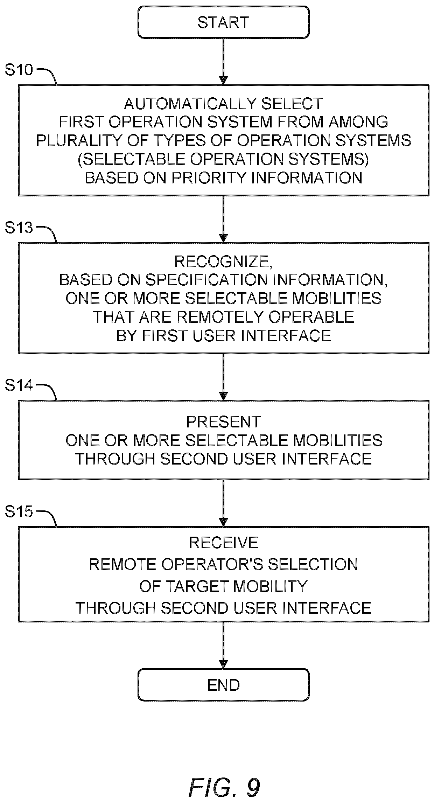

FIG. 9 is a flowchart showing an example of processing performed by the automatic selection unit 254 of the remote operator terminal 200.

In Step S10, the automatic selection unit 254 automatically selects the first operation system 210-A from the plurality of types of operation systems 210-1 to 210-N based on the priority information PREF. For example, the automatic selection unit 254 may automatically select a lastly used first operation system 210-A as the first operation system 210-A of this time, based on the history information. As another example, the automatic selection unit 254 may automatically select a most frequently used operation system 210 as the first operation system 210-A of this time, based on the history information. As still another example, the automatic selection unit 254 may automatically select an operation system 210 matching the preference of the remote operator O as the first operation system 210-A of this time, based on the operator preference information.

The automatic selection unit 254 clearly indicates the automatically-selected first operation system 210-A through the first user interface 231. However, there is a possibility that the remote operator O does not like the automatically-selected first operation system 210-A. Therefore, the automatic selection unit 254 may be configured to receive a request for change in the first operation system 210-A from the remote operator O through the first user interface 231. The selection of the first operation system 210-A by the remote operator O is as described in the above Section 3. When receiving the request for change in the first operation system 210-A from the remote operator O through the first user interface 231, the automatic selection unit 254 changes the first operation system 210-A in accordance with the request for change.

The automatic selection unit 254 updates the history information included in the priority information PREF based on the result of the selection of the first operation system 210-A. The automatic selection unit 254 notifies the signal processing unit 252 of the selected first operation system 210-A. The signal processing unit 252 grasps the selected first operation system 210-A.

Subsequent Steps S13 to S15 are the same as those in the case of the above-described Section 3.

According to the processing flow shown in FIG. 9, it is possible to efficiently select the target mobility 100-T suitable for the automatically selected first operation system 210-A.

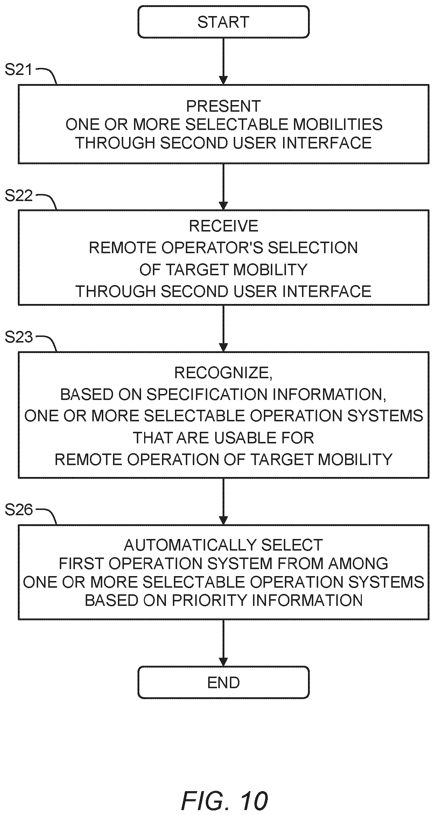

FIG. 10 is a flowchart showing another example of the processing performed by the automatic selection unit 254 of the remote operator terminal 200. Steps S21 to S23 are the same as those in the case of the above-described Section 3.

In Step S26 subsequent to Step S23, the automatic selection unit 254 automatically selects the first operation system 210-A from among the one or more selectable operation systems 210-X based on the priority information PREF. For example, the automatic selection unit 254 may automatically select a lastly used first operation system 210-A as the first operation system 210-A of this time, based on the history information. As another example, the automatic selection unit 254 may automatically select a most frequently used operation system 210 as the first operation system 210-A of this time, based on the history information. As still another example, the automatic selection unit 254 may automatically select an operation system 210 matching the preference of the remote operator O as the first operation system 210-A of this time, based on the operator preference information.

The automatic selection unit 254 clearly indicates the automatically-selected first operation system 210-A through the first user interface 231. However, there is a possibility that the remote operator O does not like the automatically-selected first operation system 210-A. Therefore, the automatic selection unit 254 may be configured to receive a request for change in the first operation system 210-A from the remote operator O through the first user interface 231. The selection of the first operation system 210-A by the remote operator O is as described in the above Section 3. When receiving the request for change in the first operation system 210-A from the remote operator O through the first user interface 231, the automatic selection unit 254 changes the first operation system 210-A in accordance with the request for change.

The automatic selection unit 254 updates the history information included in the priority information PREF based on the result of the selection of the first operation system 210-A. The automatic selection unit 254 notifies the signal processing unit 252 of the selected first operation system 210-A. The signal processing unit 252 grasps the selected first operation system 210-A.

According to the processing flow shown in FIG. 10, it is possible to efficiently select the first operation system 210-A suitable for the target mobility 100-T selected by the remote operator O.

It is also conceivable that the remote operator O desires to change the first operation system 210-A after the start of the remote operation of the target mobility 100-T. However, while the target mobility 100-T is moving, changing the first operation system 210-A is prohibited. When the target mobility 100-T is stopped, changing the first operation system 210-A is permitted. For example, during the remote operation of the target mobility 100-T, the signal processing unit 252 receives the mobility information MOV including speed information from the target mobility 100-T. The signal processing unit 252 provides the speed information to the automatic selection unit 254. The automatic selection component 254 does not accept the request for change in the first operation system 210-A when the target mobility 100-T is moving, and accepts the request for change in the first operation system 210-A when the target mobility 100-T is stopped.

When an abnormality occurs in the first operation system 210-A in use, the signal processing unit 252 may transmit a stop instruction to the target mobility 100-T. Then, the automatic selection unit 254 may automatically change the first operation system 210-A.

### 4-3. Effects

As described above, the remote operator terminal 200 is configured to automatically select the first operation system 210-A from among the plurality of types of operation systems 210-1 to 210-N. This reduces the number of operations required of the remote operator O, and thus reduces the load on the remote operator O.

### 5. CALIBRATION OF OPERATION SYSTEM

### 5-1. Overview

Depending on the type of the operation system 210, a zero point (N point, neutral point) may not be uniquely determined. For example, when the operation system 210 includes a joystick, the zero point of the joystick may not be uniquely determined. Further, since an arm strength, a leg strength, an arm length, a leg length, a physical build, and the like vary from person to person, a maximum operation point of the operation system 210 may also vary from person to person.

In view of the above, the remote operator terminal 200 may be configured to allow the remote operator O to freely perform calibration (customization) of a desired operation system 210. This improves the usability of the operation system 210 for the remote operator O.

It should be noted that a timing of the calibration is not particularly limited and is arbitrary. For example, the remote operator O may perform the calibration of each operation system 210 in advance before a request for the remote operation is issued. As another example, after the first operation system 210-A is selected for the remote operation of the target mobility 100-T, the remote operator O may perform the calibration of the first operation system 210-A.

### 5-2. Configuration Example

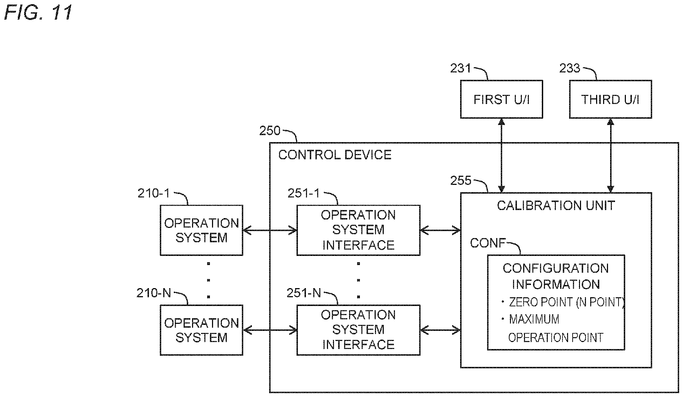

FIG. 11 is a block diagram showing an example of a configuration related to the calibration of the operation system 210. The remote operator terminal 200 includes the operation systems 210-1 to 210-N, the first user interface 231, a third user interface 233, and the control device 250. The operation systems 210-1 to 210-N and the first user interface 231 are the same as those in the case of the Section 2 or Section 3 described above.

The third user interface 233 is a user interface (UI) for the calibration of the operation system 210. The third user interface 233 is configured to be able to present a variety of notifications to the remote operator O. For example, the third user interface 233 may include a display device or a touch panel that displays a visual notification. As another example, the third user interface 233 may include a speaker that outputs an audio notification. The third user interface 233 may be the same as the first user interface 231.

The control device 250 of the remote operator terminal 200 includes the operation system interfaces 251-1 to 251-N and a calibration unit 255. The operation system interfaces 251-1 to 251-N are the same as those in the case of the Section 2 and the Section 3 described above. The calibration unit 255 performs calibration processing.

An operation system 210 being a target of the calibration this time among the plurality of types of operation systems 210-1 to 210-N is hereinafter referred to as a "target operation system 210-T." The calibration unit 255 causes the remote operator O to select the target operation system 210-T through the first user interface 231. More specifically, the calibration unit 255 prompts, through the first user interface 231, the remote operator O to select a desired target operation system 210-T from among the operation systems 210-1 to 210-N. Then, the calibration unit 255 receives the remote operator O's selection of the target operation system 210-T through the first user interface 231. The target operation system 210-T may be the first operation system 210-A selected for the remote operation of the target mobility 100-T (see the above Sections 3 and Section 4). The calibration unit 255 may clearly indicate the selected target operation system 210-T through the first user interface 231.

After the target operation system 210-T is selected, the calibration unit 255 performs the calibration of the target operation system 210-T.

First, the calibration unit 255 prompts the remote operator O to perform a predetermined action on the target operation system 210-T. More specifically, the calibration unit 255 presents a notification to the remote operator O through the third user interface 233, the notification prompting the remote operator O to perform a predetermined action on the target operation system 210-T. **In** response to the notification, the remote operator O performs the predetermined action on the target operation system 210-T.

The target operation system 210-T outputs an operation signal according to the predetermined action performed by the remote operator O. The calibration unit 255 receives the operation signal from the target operation system 210-T through the operation system interface 251-T. The operation signal reflects a content of the predetermined action performed by the remote operator O. Moreover, the operation signal reflects a state of the target operation system 210-T during the predetermined action. The calibration unit 255 sets at least one of the zero point and the maximum operation point of the target operation system 210-T based on the received operation signal.

### 5-3. Examples of Zero Point Setting

### 5-3-1. First Example

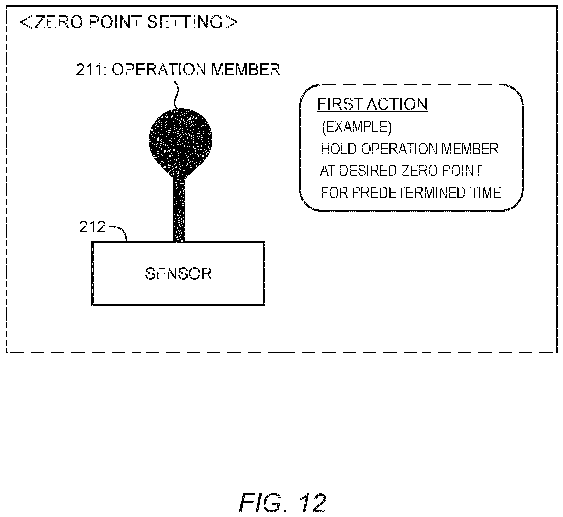

FIG. 12 is a conceptual diagram for explaining a first example of the zero point setting. The target operation system 210-T includes an operation member 211 (e.g., a joystick) that is physically movable. A position of the operation member 211 is detected by a sensor 212. The position of the operation member 211 detected by the sensor 212 is reflected in the operation amount during the remote operation. The operation signal indicates the position of the operation member 211 detected by the sensor 212.

A first action is the predetermined action requested to the remote operator O at the time of the zero point setting. In the case of the example shown in FIG. 12, the first action is, for example, "holding the position of the operation member 211 at a desired zero point for a predetermined time." The predetermined time is, for example, several seconds.

A first notification is the notification for prompting the remote operator O to perform the first action on the target operation system 210-T. In the case of the example shown in FIG. 12, the first notification prompts the remote operator O to "hold the position of the operation member 211 at a desired zero point for a predetermined time." The calibration unit 255 presents such the first notification to the remote operator O through the third user interface 233. The first notification may be a visual notification or an audio notification.

In response to the first notification, the remote operator O performs the first action on the target operation system 210-T. The target operation system 210-T outputs the operation signal according to the first action performed by the remote operator O. The operation signal indicates the state of the target operation system 210-T during the first action. In the case of the example shown in FIG. 12, the operation signal indicates the position of the operation member 211 during the first action. The calibration unit 255 sets the zero point of the operation member 211 based on the position of the operation member 211 during the first action. For example, the calibration unit 255 sets an average position of the operation member 211 during the first action as the zero point of the operation member 211.

### 5-3-2. Second Example

In a second example, the target operation system 210-T is the gaze-based operation system. The gaze-based operation system includes the gaze measurement device (gaze camera, eye tracker) that measures a gaze direction of the remote operator O. A change in the gaze direction of the remote operator O is reflected in the operation amount during the remote operation. The operation signal includes information on the gaze direction of the remote operator O measured by the gaze measuring device.

The first action is, for example, "holing the gaze direction at a desired zero point for a predetermined time." The predetermined time is, for example, several seconds. The first notification prompts the remote operator O to "hold the gaze direction at a desired zero point for a predetermined time." The calibration unit 255 presents such the first notification to the remote operator O through the third user interface 233. The first notification may be a visual notification or an audio notification.

In response to the first notification, the remote operator O holds the gaze direction at a desired zero point for a predetermined time or more. For example, a plurality of gazing candidate points are displayed on a screen, and the remote operator O gazes at one gazing candidate point corresponding to the desired zero point for a predetermined time or more. The operation signal indicates the content of the first action, that is, the gaze direction of the remote operator O. The calibration unit 255 sets the zero point of the gaze measurement device based on the gaze direction of the remote operator O during the first action. For example, the calibration unit 255 sets an average direction of the gaze direction of the remote operator O during the first action as the zero point of the gaze measurement device.

### 5-3-3. Third Example

In a third example, the target operation system 210-T is a mobile terminal. Examples of the mobile terminal include a smartphone and a tablet. An inclination (posture) of the mobile terminal is reflected in the operation amount during the remote operation. The inclination of the mobile terminal is detected by, for example, a gyro sensor or an acceleration sensor mounted on the mobile terminal. The operation signal indicates the inclination of the mobile terminal detected by the sensor.

The first action is, for example, "holding the inclination of the mobile terminal at a desired zero point for a predetermined time." The predetermined time is, for example, several seconds. The first notification prompts the remote operator O to "hold the inclination of the mobile terminal at a desired zero point for a predetermined time." The calibration unit 255 presents such the first notification to the remote operator O through the third user interface 233. The first notification may be a visual notification or an audio notification.

In response to the first notification, the remote operator O holds the inclination of the mobile terminal at a desired zero point for a predetermined time or more. The operation signal indicates the state of the mobile terminal during the first action, that is, the inclination of the mobile terminal. The calibration unit 255 sets the zero point of the mobile terminal based on the inclination of the mobile terminal during the first action. For example, the calibration unit 255 sets an average inclination of the mobile terminal during the first action as the zero point of the mobile terminal.

### 5-4. Examples of Maximum Operation Point Setting

### 5-4-1. First Example

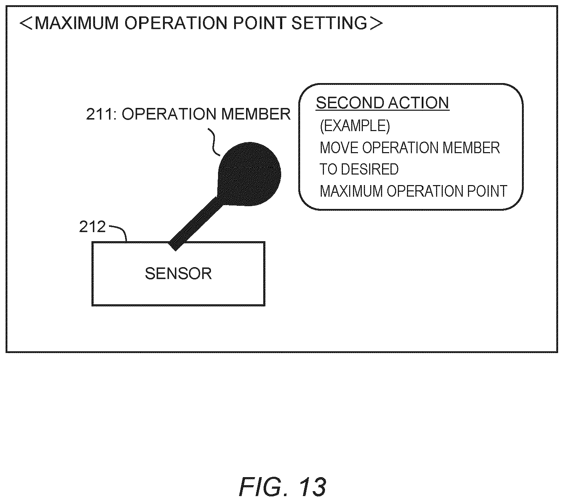

FIG. 13 is a conceptual diagram for explaining a first example of the maximum operation point setting. The target operation system 210-T includes an operation member 211 (e.g., a joystick) that is physically movable. A position of the operation member 211 is detected by a sensor 212. The position of the operation member 211 detected by the sensor 212 is reflected in the operation amount during the remote operation. The operation signal indicates the position of the operation member 211 detected by the sensor 212.

A second action is the predetermined action requested to the remote operator O at the time of the maximum operation point setting. In the example shown in FIG. 13, the second action is, for example, "moving the position of the operation member 211 to a desired maximum operation point."

A second notification is the notification for prompting the remote operator O to perform the second action on the target operation system 210-T. In the case of the example shown in FIG. 13, the second notification prompts the remote operator O to "move the position of the operation member 211 to a desired maximum operation point." The calibration unit 255 presents such the second notification to the remote operator O through the third user interface 233. The second notification may be a visual notification or an audio notification.

In response to the second notification, the remote operator O performs the second action on the target operation system 210-T. The target operation system 210-T outputs the operation signal according to the second action performed by the remote operator O. The operation signal indicates the state of the target operation system 210-T during the second action. In the example shown in FIG. 13, the operation signal indicates the position of the operation member 211 during the second action. The calibration unit 255 sets the maximum operation point of the operation member 211 based on a maximum displacement of the operation member 211 during the second action. That is, the calibration unit 255 sets a maximum displacement point of the operation member 211 during the second action as the maximum operation point.

It should be noted that the maximum operation point may be set for each of the case where the operation member 211 is pulled and the case where the operation member 130 is pushed.

### 5-4-2. Second Example

In the second example, the target operation system 210-T is the gaze-based operation system. The gaze-based operation system includes the gaze measurement device (gaze camera, eye tracker) that measures the gaze direction of the remote operator O. A change in the gaze direction of the remote operator O is reflected in the operation amount during the remote operation. The operation signal includes information on the gaze direction of the remote operator O measured by the gaze measuring device.

The second action is, for example, "moving the gaze direction to a desired maximum operation point." The second notification prompts the remote operator O to "move the gaze direction to a desired maximum operation point." The calibration unit 255 presents such the second notification to the remote operator O through the third user interface 233. The second notification may be a visual notification or an audio notification.

**In** response to the second notification, the remote operator O moves the gaze direction to a desired maximum operation point. The operation signal indicates the content of the second action, that is, the gaze direction of the remote operator O. The calibration unit 255 sets the maximum operation point of the gaze measurement device on the basis of a maximum displacement of the gaze direction of the remote operator O during the second action. That is, the calibration unit 255 sets a maximum displacement point of the gaze direction of the remote operator O during the second action as the maximum operation point.

### 5-4-3. Third Example

In a third example, the target operation system 210-T is a mobile terminal. Examples of the mobile terminal include a smartphone and a tablet. An inclination (posture) of the mobile terminal is reflected in the operation amount during the remote operation. The inclination of the mobile terminal is detected by, for example, a gyro sensor or an acceleration sensor mounted on the mobile terminal. The operation signal indicates the inclination of the mobile terminal detected by the sensor.

The second action is, for example, "changing the inclination of the mobile terminal to a desired maximum operation point." The second notification prompts the remote operator O to "change the inclination of the mobile terminal to a desired maximum operation point." The calibration unit 255 presents such the second notification to the remote operator O through the third user interface 233. The second notification may be a visual notification or an audio notification.

In response to the second notification, the remote operator O changes the inclination of the mobile terminal to a desired maximum operation point. The operation signal indicates the state of the mobile terminal during the second action, that is, the inclination of the mobile terminal. The calibration unit 255 sets the maximum operation point of the mobile terminal based on a maximum change in the inclination of the mobile terminal during the second action. For example, the calibration unit 255 sets a maximum change point of the inclination of the mobile terminal during the second action as the maximum operation point of the mobile terminal.

### 5-5. Configuration Information

As shown in FIG. 11, the calibration unit 255 stores configuration information CONF. The configuration information CONF indicates the zero point and the maximum operation point of each operation system 210-i (i = 1 to N). Initially, the configuration information CONF may indicate default values (initial values) of the zero point and the maximum operation point of each operation system 210-i. By the above-described calibration processing, the zero point and the maximum operation point of the target operation system 210-T in the configuration information CONF are updated. The calibration may be performed on all of the plurality of types of operation systems 210-1 to 210-N.

The calibration unit 255 provides the latest configuration information CONF to the signal processing unit 252. The signal processing unit 252 may generate the remote operation information OPE regarding the first operation system 210-A based on the zero point and the maximum operation point of the first operation system 210-A indicated by the configuration information CONF.

### 5-6. Effects

As described above, the remote operator terminal 200 is configured to allow the remote operator O to perform the calibration (customization) of a desired target operation system 210-T. This improves the usability of the operation system 210 for the remote operator O.

### 6. END NOTIFICATION

### 6-1. Overview

Depending on the type of the first operation system 210-A used for the remote operation of the target mobility 100-T, there may be a case where no mechanical end exists (example: joystick). In this case, the remote operator O may not be able to recognize that the current operation amount has reached the maximum operation amount of the first operation system 210-A.

In view of the above, the remote operator terminal 200 may be configured to notify the remote operator O of information indicating that the current operation amount input by the remote operator O has reached the maximum operation amount of the first operation system 210-A. As another example, the remote operator terminal 200 may be configured to notify the remote operator O of information indicating a relationship between the maximum operation amount and the current operation amount of the first operation system 210-A. The reason is that recognizing the relationship between the maximum operation amount and the current operation amount makes it possible to recognize that the current operation amount has reached the maximum operation amount. Since the remote operator O is able to recognize that the current operation amount has reached the maximum operation amount, it becomes easier to remotely operate the target mobility 100-T more accurately. That is, the accuracy of the remote operation of the target mobility 100-T is improved.

### 6-2. Configuration Example

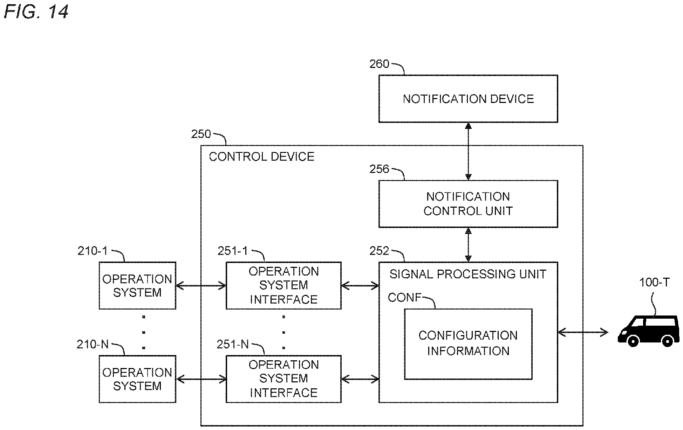

FIG. 14 is a block diagram showing an example of a configuration related to the end notification. The remote operator terminal 200 includes the operation systems 210-1 to 210-N, the control device 250, and a notification device 260. The operation systems 210-1 to 210-N are the same as those in the cases of the Section 2 and Section 3 described above. The notification device 260 is configured to be able to notify the remote operator O of a variety of information. Concrete examples of the notification device 260 will be described later.

The control device 250 of the remote operator terminal 200 includes the operation system interfaces 251-1 to 251-N, the signal processing unit 252, and a notification control unit 256. The operation system interfaces 251-1 to 251-N are the same as those in the cases of the Section 2 and Section 3 described above.

The signal processing unit 252 stores the configuration information CONF. As described above, the configuration information CONF indicates the zero point and the maximum operation point of each operation system 210-i (i = 1 to N). During the remote operation of the target mobility 100-T, the signal processing unit 252 receives the operation signal from the first operation system 210-A through the operation system interface 251-A. The operation signal indicates a current operation amount and a current operation content of the first operation system 210-A. The signal processing unit 252 can generate the remote operation information OPE regarding the first operation system 210-A based on the operation signal received from the first operation system 210-A and the configuration information CONF regarding the first operation system 210-A.

Moreover, the signal processing unit 252 provides the notification control unit 256 with the operation signal and the configuration information CONF regarding the first operation system 210-A. The operation signal indicates the current operation amount and the current operation content input by the remote operator O. The maximum operation point indicated by the configuration information CONF corresponds to the maximum operation amount. Further, the signal processing unit 252 receives the mobility information MOV from the target mobility 100-T, and provides the notification control unit 256 with the mobility information MOV.

The notification control unit 256 notifies the remote operator O of a variety of information by controlling the notification device 260. For example, the notification control unit 256 notifies the remote operator O of information indicating the relationship between the maximum operation amount and the current operation amount of the first operation system 210-A, based on the operation signal and the configuration information CONF regarding the first operation system 210-A. As another example, the notification control unit 256 may notify the remote operator O of information indicating that the current operation amount reaches the maximum operation amount.

### 6-3. Various Examples

Various examples of the notification device 260 and the end notification will be described below.

6-3-1. First Example

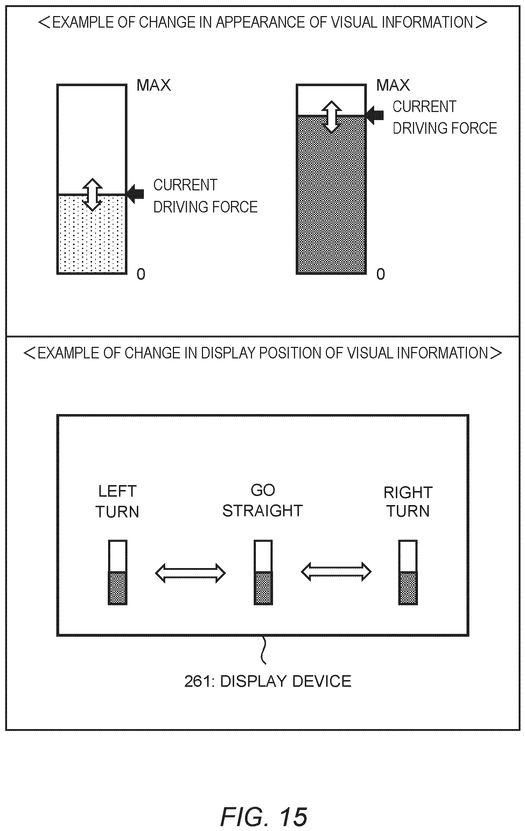

FIG. 15 is a conceptual diagram for explaining a first example of the end notification. In the first example, the notification device 260 includes a display device 261 that displays visual information.

The notification control unit 256 controls the display device 261 to display visual information indicating the relationship between the maximum operation amount and the current operation amount of the first operation system 210-A. That is, the display device 261 displays visual information indicating the relationship between the maximum operation amount and the current operation amount of the first operation system 210-A. In the example shown in FIG. 15, the display device 261 displays visual information indicating a relationship between a current driving force and a maximum driving force. The maximum driving force is represented by a first rectangle of a predetermined height. A second rectangle representing the current driving force is included in the first rectangle. A height of the second rectangle increases as the current driving force increases.

Thus, the remote operator O is able to intuitively grasp how much the current operation amount is with respect to the maximum operation amount. **In** addition, the remote operator O is able to recognize that the current operation amount reaches the maximum operation amount.

The notification control section 256, that is, the display device 261 may dynamically change at least one of color, luminance, saturation, and size of the visual information as the current operation amount becomes closer to the maximum operation amount. For example, as the current driving force becomes closer to the maximum driving force, the color of the visual information (e.g., the second rectangle) may gradually change from a bluish color to a reddish color.

The notification control unit 256, that is, the display device 261 may dynamically change a display position of the visual information in accordance with a steering operation performed by the remote operator O. Information (a steering direction and a steering amount) regarding the steering operation performed by the remote operator O is obtained from the operation signal provided from the first operation system 210-A. For example, at the time of going straight, the visual information is displayed near a center of a screen of the display device 261. Then, the display position of the visual information moves so as to be consistent with the steering direction. That is, at the time of left turn, the visual information is displayed on the left side in the screen of the display device 261. On the other hand, at the time of right turn, the visual information is displayed on the right side in the screen of the display device 261. An amount of displacement of the display position may increase as the steering amount increases. Since the gaze direction of the remote operator O is highly likely to coincide with the steering direction, the remote operator O is able to more easily view the visual information by dynamically changing the display position of the visual information in accordance with the steering operation as described above. That is, the remote operator O is able to more easily grasp the relationship between the maximum operation amount and the current operation amount of the first operation system 210-A.

### 6-3-2. Second Example

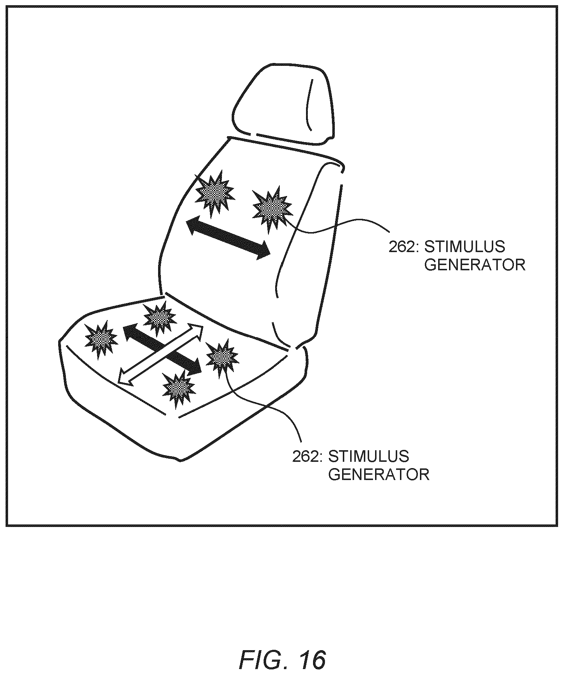

FIG. 16 is a conceptual diagram for explaining a second example of the end notification. In the second example, the notification device 260 includes a stimulus generator 262 configured to apply a force or a vibration to the remote operator O. Examples of the stimulus generator 262 include a haptic device, a vibration generator, a massage apparatus, and the like. For example, the stimulus generator 262 is embedded in a seat on which the remote operator O sits.

The notification control unit 256 controls the stimulus generator 262 to generate a force or a vibration. That is, the stimulus generator 262 applies a force or a vibration to the remote operator O. The notification control unit 256, that is, the stimulus generator 262 applies a specific force or a specific vibration to the remote operator O when the current operation amount reaches the maximum operation amount. For example, the notification control unit 256, that is, the stimulus generator 262 applies a force or a vibration having a characteristic pattern to the remote operator O when the current operation amount reaches the maximum operation amount. Thus, the remote operator O is able to recognize that the current operation amount reaches the maximum operation amount.

The notification control unit 256, that is, the stimulus generator 262 may increase a magnitude of the force or the vibration applied to the remote operator O as the current operation amount becomes closer to the maximum operation amount.

The notification control unit 256, that is, the stimulus generator 262 may dynamically change a generation position of the force or the vibration in accordance with the steering operation performed by the remote operator O. Information (a steering direction and a steering amount) regarding the steering operation performed by the remote operator O is obtained from the operation signal provided from the first operation system 210-A. For example, at the time of going straight, the force or the vibration is generated near the center of the seat. Then, the generation position of the force or the vibration moves so as to be consistent with the steering direction. That is, at the time of left turn, the force or the vibration is generated on the left side of the seat. On the other hand, at the time of right turn, the force or the vibration is generated on the right side of the seat. An amount of displacement of the generation position may increase as the steering amount increases.

The notification control unit 256, that is, the stimulus generator 262 may dynamically change the generation position of the force or the vibration in accordance with the speed of the target mobility 100-T. The speed of the target mobility 100-T is obtained from the mobility information MOV. For example, as the speed of the target mobility 100-T increases, the generation position of the force or the vibration may move toward the front of the seat.

### 6-3-3. Third Example

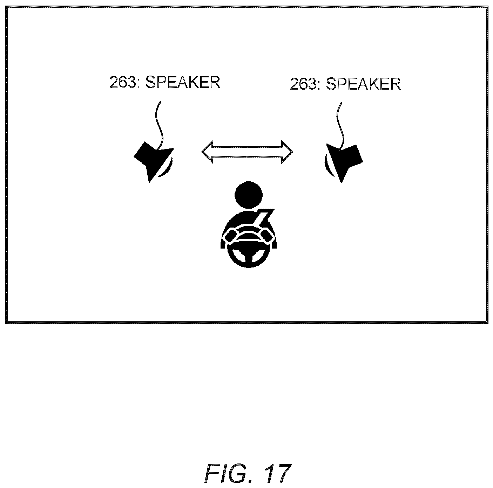

FIG. 17 is a conceptual diagram for explaining a third example of the end notification. In the third example, the notification device 260 includes a speaker 263 configured to output a sound. For example, the speaker 263 is installed around a seat on which the remote operator O sits. A plurality of speakers 263 may be installed.

The notification control unit 256 controls the speaker 263 to generate a sound. The notification control unit 256, that is, the speaker 263 outputs a specific sound (for example, "It has reached the maximum operation amount") when the current operation amount reaches the maximum operation amount. Thus, the remote operator O is able to recognize that the current operation amount reaches the maximum operation amount.

The notification control unit 256, that is, the speaker 263 may increase a strength of the sound to be output as the current operation amount becomes closer to the maximum operation amount.

The notification control unit 256, that is, the speaker 263 may dynamically change an output position of the sound in accordance with the steering operation performed by the remote operator O. Information (a steering direction and a steering amount) regarding the steering operation performed by the remote operator O is obtained from the operation signal provided from the first operation system 210-A. For example, at the time of going straight, the sound is output from overhead of the remote operator O. Then, the output position of the sound moves so as to be consistent with the steering direction. That is, at the time of left turn, the sound is output from the left side of the remote operator O. On the other hand, at the time of right turn, the sound is output from the right side of the remote operator O. An amount of displacement of the output position of the sound may increase as the steering amount increases.

The notification control unit 256, that is, the speaker 263, may dynamically change the output position of the sound in accordance with the speed of the target mobility 100-T. The speed of the target mobility 100-T is obtained from the mobility information MOV. For example, the output position of the sound may move forward as the speed of the target mobility 100-T increases.

### 6-4. Effects

As described above, the remote operator terminal 200 is configured to notify the remote operator O of information indicating that the current operation amount reaches the maximum operation amount of the first operation system 210-A. As another example, the remote operator terminal 200 may be configured to notify the remote operator O of information indicating the relationship between the maximum operation amount and the current operation amount of the first operation system 210-A. In either case, the remote operator O is able to recognize that the current operation amount reaches the maximum operation amount. As a result, it becomes easier for the remote operator O to remotely operate the target mobility 100-T more accurately. That is, the accuracy of the remote operation of the target mobility 100-T is improved.

### 7. COMBINATION

A combination of two or more of the features described in the above Sections 3 to 6 is also possible.

### 8. CONFIGURATION EXAMPLE OF REMOTE OPERATOR TERMINAL

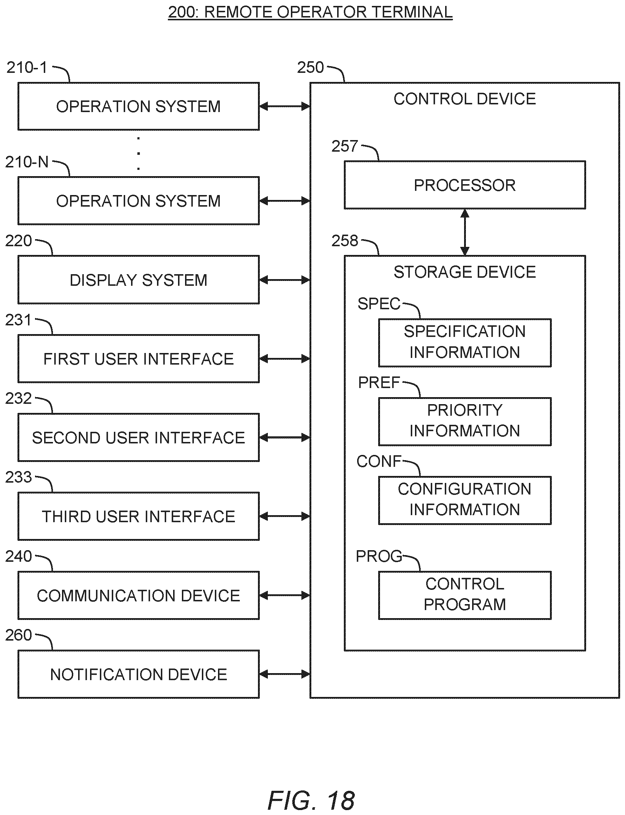

FIG. 18 is a block diagram showing an example of a configuration of the remote operator terminal 200. The remote operator terminal 200 includes a plurality of different types of operation systems 210-1 to 210-N, a display system 220, a variety of user interfaces 231, 232, and 233, a communication device 240, a control device 250, and a notification device 260. The operation systems 210-1 to 210-N, the user interfaces 231, 232, and 233, and the notification device 260 are as described above.

The display system 220 displays a variety of information for the remote operator O who performs the remote operation. In other words, the display system 220 presents a variety of information to the remote operator O by displaying the variety of information. The display system 220 includes a display device (monitor) such as a liquid crystal display, an organic EL display, a touch panel, and the like. The display system 220 (touch panel) may include the first user interface 231. The display system 220 (touch panel) may include the second user interface 232. The display system 220 (touch panel) may include the third user interface 233. The display system 220 may include the display device 261 as the notification device 260 illustrated in FIG. 15.

The communication device 240 communicates with the target mobility 100-T and the management system 300 via the communication network.

The control device (controller) 250 controls the remote operator terminal 200. The control device 250 may include one or more processors 257 (hereinafter, simply referred to as a processor 257) and one or more storage devices 258 (hereinafter, simply referred to as a storage device 258). The processor 257 executes a variety of processing. Examples of the processor 257 include a general-purpose processor, a special-purpose processor, a central processing unit (CPU), a graphics processing unit (GPU), an application specific integrated circuit (ASIC), a field-programmable gate array (FPGA), an integrated circuit, a conventional circuit, and/or combinations thereof. The processor 257 may also be referred to as circuitry or processing circuitry. The circuitry may be hardware. The hardware may be any hardware disclosed herein or otherwise known which is programmed or configured to carry out the recited functionality. The storage device 258 stores a variety of information. Examples of the storage device 258 include a volatile memory, a nonvolatile memory, a hard disk drive (HDD), a solid state drive (SSD), and the like.

A control program PROG is a computer program executed by the processor 257. The functions of the control device 250 may be implemented by a cooperation of the processor 257 executing the control program PROG and the storage device 258. The control program PROG is stored in the storage device 258. Alternatively, the control program PROG may be recorded on a non-transitory computer-readable recording medium. The control program PROG may be provided via a network.

The control device 250 includes necessary functions among the functions of the operation system interface 251, the signal processing unit 252, the selection control unit 253, the automatic selection unit 254, the calibration unit 255, the notification control unit 256, and the like described above. The specification information SPEC, the priority information PREF, the configuration information CONF, and the like are stored in the storage device 258.

During the remote operation of the target mobility 100-T, the control device 250 communicates with the target mobility 100-T via the communication device 240. The control device 250 receives the mobility information MOV transmitted from the target mobility 100-T. The control device 250 presents the mobility information MOV including the video to the remote operator O through the display system 220. The remote operator O is able to recognize the state and the surrounding situation of the target mobility 100-T based on the mobility information MOV presented through the display system 220.

The remote operator O uses the first operation system 210-A to input the operation amount and the operation content for the remote operation of the target mobility 100-T. The operation amount and the operation content for the remote operation are detected by the sensor installed in the first operation system 210-A. The control device 250 generates the remote operation information OPE reflecting the operation amount and the operation content input by the remote operator O. It can be said that the remote operation information OPE is information reflecting a degree of the remote operation performed by the remote operator O. The control device 250 transmits the remote operation information OPE to the target mobility 100-T via the communication device 240.

## Claims

1. A remote operator terminal (200) to be used by a remote operator (O) for a remote operation of a target mobility (100-T),
the remote operator terminal (200) comprising:
a plurality of types of operation systems (210-1 to 210-N);
a user interface (233); and
a control device (250) configured to perform calibration of a targe operation system (210-T) among the plurality of types of operation systems (210-1 to 210-N), wherein
in the calibration, the control device (250) is further configured to:
present a first notification to the remote operator (O) through the user interface (233), the first notification prompting the remote operator (O) to perform a first action on the targe operation system (210-T); and
set a zero point of the targe operation system (210-T) based on a content of the first action or a state of the targe operation system (210-T) during the first action.

2. The remote operator terminal (200) according to claim 1, wherein
the targe operation system (210-T) includes an operation member (211) that is physically movable,
a position of the operation member (211) is reflected in an operation amount during the remote operation,
the first action is to hold the position of the operation member (211) at a desired zero point for a predetermined time, and
the control device (250) is further configured to set the zero point of the operation member (211) based on the position of the operation member (211) during the first action.

3. The remote operator terminal (200) according to claim 1, wherein
the targe operation system (210-T) includes a gaze measurement device configured to measure a gaze direction of the remote operator (O),
a change in the gaze direction of the remote operator (O) is reflected in an operation amount during the remote operation,
the first action is to hold the gaze direction at a desired zero point for a predetermined time, and
the control device (250) is further configured to set the zero point of the gaze measurement device based on the gaze direction during the first action.

4. The remote operator terminal (200) according to claim 1, wherein
the targe operation system (210-T) includes a mobile terminal,
an inclination of the mobile terminal is reflected in an operation amount during the remote operation,
the first action is to hold the inclination of the mobile terminal at a desired zero point for a predetermined time, and
the control device (250) is further configured to set the zero point of the mobile terminal based on the inclination of the mobile terminal during the first action.

5. The remote operator terminal (200) according to claim 1, wherein
in the calibration, the control device (250) is further configured to:
present a second notification to the remote operator (O) through the user interface (233), the second notification prompting the remote operator (O) to perform a second action on the targe operation system (210-T); and
set a maximum operation point of the targe operation system (210-T) based on a content of the second action or a state of the targe operation system (210-T) during the second action.

6. The remote operator terminal (200) according to claim 5, wherein
the targe operation system (210-T) includes an operation member (211) that is physically movable,
a position of the operation member (211) is reflected in an operation amount during the remote operation,
the second action is to move the position of the operation member (211) to a desired maximum operation point, and
the control device (250) is further configured to set the maximum operation point of the operation member (211) based on a maximum displacement of the operation member (211) during the second action.

7. The remote operator terminal (200) according to claim 5, wherein
the targe operation system (210-T) includes a gaze measurement device configured to measure a gaze direction of the remote operator (O),
a change in the gaze direction of the remote operator (O) is reflected in an operation amount during the remote operation,
the second action is to move the gaze direction to a desired maximum operation point, and
the control device (250) is further configured to set the maximum operation point of the gaze measurement device based on a maximum displacement of the gaze direction during the second action.

8. The remote operator terminal (200) according to claim 5, wherein
the targe operation system (210-T) includes a mobile terminal,
an inclination of the mobile terminal is reflected in an operation amount during the remote operation,
the second action is to change the inclination of the mobile terminal to a desired maximum operation point, and
the control device (250) is further configured to set the maximum operation point of the mobile terminal based on a maximum change in the inclination of the mobile terminal during the second action.

9. The remote operator terminal (200) according to any one of claims 1 to 8, wherein
the targe operation system (210-T) is a first operation system (210-A) selected for the remote operation from among the plurality of types of operation systems (210-1 to 210-N).
